# EUROPEAN PATENT APPLICATION

(11) **EP 4 787 402 A1**
(43) Date of publication of application: **05.08.2026**
(21) Application number: 24870149.2
(22) Date of filing: 12.08.2024
(51) Int. Cl.: H01B 7/14, H01B 7/00, H01B 7/282, H01B 7/17, H01B 7/288

(54) **WATER-BLOCKING CONDUCTOR AND SUBMARINE CABLE**

(30) Priority: 27.09.2023 CN 202311263605
(71) Applicant: Zhongtian Technology Submarine Cable Co., Ltd., Jiangsu 226000 (CN); South Sea Submarine Cable Co., Ltd., Shanwei, Guangdong 516545 (CN); ZHONGTIAN DAFENG SUBMARINE CABLE CO., LTD., Jiangsu 224145 (CN); Jiangsu Zhongtian Technology Co., Ltd., Nantong, Jiangsu 226000 (CN)
(72) Inventor: WANG, Wenchao, Nantong, Jiangsu 226000 (CN); WANG, Haiyang, Nantong, Jiangsu 226000 (CN); YE, Cheng, Nantong, Jiangsu 226000 (CN); HU, Ming, Nantong, Jiangsu 226000 (CN); NIE, Ying, Nantong, Jiangsu 226000 (CN); SUN, Yanyu, Nantong, Jiangsu 226000 (CN); ZHAO, Youlin, Nantong, Jiangsu 226000 (CN); ZHANG, Xiaolong, Nantong, Jiangsu 226000 (CN); PAN, Pan, Nantong, Jiangsu 226000 (CN); LIU, Ligang, Nantong, Jiangsu 226000 (CN); WANG, Jiajia, Nantong, Jiangsu 226000 (CN); CHEN, Jie, Nantong, Jiangsu 226000 (CN); ZHANG, Zhengdong, Nantong, Jiangsu 226000 (CN)
(74) Representative: J A Kemp LLP
(86) International application number: PCT/CN2024/111448
(87) International publication number: WO 2025/066601

(57) **Abstract**

A water-blocking conductor and a submarine cable are provided. The water-blocking conductor includes: a plurality of sector-shaped stranded blocks, a first optical unit, a plurality of water-blocking conductor blocks and a self-locking single-wire conductor layer, where the plurality of sector-shaped stranded blocks are spliced together to form a skeleton structure, a through hole is formed in a center of the skeleton structure, a first optical unit is provided in the through hole, and a first water-blocking layer is provided between two adjacent sector-shaped stranded blocks; each water-blocking conductor block is provided within one sector-shaped stranded block; and the self-locking single-wire conductor layer is wrapped around an exterior of the skeleton structure. According to the water-blocking conductor, by providing the plurality of the sector-shaped stranded blocks, the structure of the water-blocking conductor is partitioned to improve the skin effect of the conductor, reduce the resistance of the water-blocking conductor and lower line losses. Providing the plurality of water-blocking conductor blocks may make the vacant area within each sector-shaped stranded block fully filled. By providing the self-locking single-wire conductor layer, the sector-partitioned water-blocking conductor blocks are bound inside the water-blocking conductor, forming the water-blocking conductor with a compact structure.

## Description

The present application claims priority to Chinese Patent Application No. 202311263605.5, entitled with "WATER-BLOCKING CONDUCTOR AND SUBMARINE CABLE", filed with the China National Intellectual Property Administration on September 27, 2023, which is hereby incorporated by reference in its entirety.

### TECHNICAL FIELD

The present invention relates to the technical field of submarine cables and, in particular, to a water-blocking conductor and submarine cable.

### BACKGROUND

With the continuous development in the field of submarine power transmission, higher demands are put forward for the transmission capacity of submarine cables. Currently, the thermally harsh sections of submarine cables are mainly located in the laying environments such as landing sections, and have become the mains areas restricting the transmission capacity of submarine cables. Blindly increasing the section of submarine cables would significantly increase the weight and dimensions of submarine cables and raise costs, which is not conducive to the transportation and construction and laying of submarine cables. In order to improve the current-carrying capacity of AC submarine cables, a more effective way starting from conductors is to reduce the AC resistance of the conductors and lower line losses. Based on this, providing a new type of water-blocking conductor and submarine cable has become an urgent problem to be solved in this industry.

### SUMMARY

The present application provides a water-blocking conductor and a submarine cable, which are used for solving the defect of large conductor resistance in the prior art.

The present application provides a water-blocking conductor, including: a plurality of sector-shaped stranded blocks, where the plurality of sector-shaped stranded blocks are spliced together to form a skeleton structure, a through hole is formed in a center of the skeleton structure, a first optical unit is disposed in the through hole, and a first water-blocking layer is provided between two adjacent sector-shaped stranded blocks; a plurality of water-blocking conductor blocks, where each water-blocking conductor block is disposed within one sector-shaped stranded block; a self-locking single-wire conductor layer, which is wrapped around an exterior of the skeleton structure.

According to the water-blocking conductor provided by the application, each water-blocking conductor block includes: multiple layers of single-wire conductors, which are disposed within one sector-shaped stranded block; a plurality of second water-blocking layers, which are sandwiched between two adjacent layers of the single-wire conductors.

According to the water-blocking conductor provided by the application, the self-locking single-wire conductor layer includes: a first self-locking single-wire conductor layer, which is wrapped around the exterior of the skeleton structure; a second self-locking single-wire conductor layer, which is wrapped around an exterior of the first self-locking single-wire conductor layer, where a stranding direction of the second self-locking single-wire conductor layer is opposite to that of the first self-locking single-wire conductor layer.

According to the water-blocking conductor provided by the present application, the first self-locking single-wire conductor layer includes a plurality of first self-locking single-wire conductors which are annularly disposed along a circumferential direction of the skeleton structure; the second self-locking single-wire conductor layer includes a plurality of second self-locking single-wire conductors which are annularly disposed along a circumferential direction of the first self-locking single-wire conductor layer; the first self-locking single-wire conductor and the second self-locking single-wire conductor are each one of a Z-type single-wire conductor and an S-type single-wire conductor.

According to the water-blocking conductor provided by the present application, the self-locking single-wire conductor layer further includes a third water-blocking layer sandwiched between the first self-locking single-wire conductor layer and the second self-locking single-wire conductor layer.

According to the water-blocking conductor provided by the present application, the first optical unit includes a plurality of optical fibers and a water-blocking fiber paste, where the water-blocking fiber paste is filled among the plurality of optical fibers, and the optical fibers are configured for detecting a temperature of the water-blocking conductor in real time.

According to the water-blocking conductor provided by the present application, the first self-locking single-wire conductor and the second self-locking single-wire conductor are enamel-coated wires, or metal wires provided with an oxide layer.

The present application further provides a submarine cable, including: the above water-blocking conductor; a cross-linked layered structure formed by a conductor shielding layer, an insulation layer and an insulation shielding layer, where the cross-linked layered structure is wrapped around an exterior of the water-blocking conductor; and a first semi-conductive water-blocking layer, which is wrapped around an exterior of the insulation shielding layer.

According to the submarine cable provided by the present application, the submarine cable further includes: a metal shielding layer, which is wrapped around an exterior of the first semi-conductive water-blocking layer; and a second semi-conductive water-blocking layer, which is wrapped around an exterior of the metal shielding layer.

According to the submarine cable provided by the present application, the shielding layer includes: a first metal shielding layer, which is wrapped around an exterior of the first semi-conductive water-blocking layer and has a structure of red copper wire helically wound with space; and a second metal shielding layer, which is wrapped around an exterior of the first metal shielding layer and has a structure of open-helix wrapping of red copper tape.

According to the water-blocking conductor provided by the present application, by providing the plurality of the sector-shaped stranded blocks, the resistance of the water-blocking conductor is partitioned, reducing the resistance of the water-blocking conductor and reducing line losses. By providing the plurality of water-blocking conductor blocks, the vacant area within each sector-shaped stranded block is fully filled. By providing the self-locking single-wire conductor layer, the water-blocking conductor blocks are bound into the sector-shaped stranded blocks, forming the water-blocking conductor with a compact structure.

### BRIEF DESCRIPTION OF THE DRAWINGS

To describe the technical solutions in the present application or in the prior art more clearly, the following briefly explains the accompanying drawings required for describing the embodiments or the prior art. Apparently, the accompanying drawings in the following description are merely some embodiments of the present application, and persons of ordinary skill in the art may still derive other drawings from these accompanying drawings without creative effort.
FIG. 1 is a schematic structural diagram of a water-blocking conductor according to the present application.
FIG. 2 is a schematic structural diagram of a submarine cable according to the present application.

### Reference numerals:

10: water-blocking conductor; 11: sector-shaped stranded block; 12: first optical unit; 13: single-wire conductor; 14: first self-locking single-wire conductor; 15: second self-locking single-wire conductor; 21: conductor shielding layer; 22: insulation layer; 23: insulation shielding layer; 30: first semi-conductive water-blocking layer; 41: first metal shielding layer; 42: second metal shielding layer; 50: second semi-conductive water-blocking layer; 60: composite tape layer; 70: sheath layer; 80: filling layer; 90: second optical unit; 101: through hole; 110: wrapping tape layer; 120: inner liner layer; 130: armoring layer; 140: outer cladding layer.

### DESCRIPTION OF EMBODIMENTS

To make the objectives, technical solutions, and advantages of the present application clearer, the technical solutions of the present application will be described clearly and comprehensively below with reference to the accompanying drawings of the present application. Apparently, the described embodiments are merely a part rather than all embodiments of the present application. Based on the embodiments of the present application, all other embodiments obtained by persons of ordinary skill in the art without creative effort shall fall within the protection scope of the present application.

In the description and claims of the present application, the features defined with the terms "first" and "second" may explicitly or implicitly include one or more such features. In the description of the present application, "a plurality of" refers to two or more unless otherwise specified.

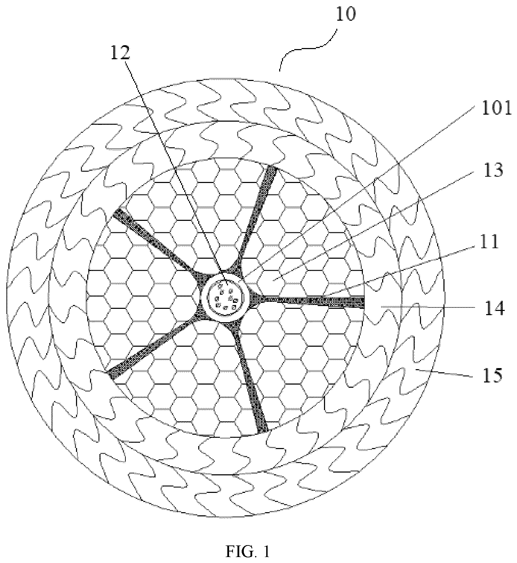

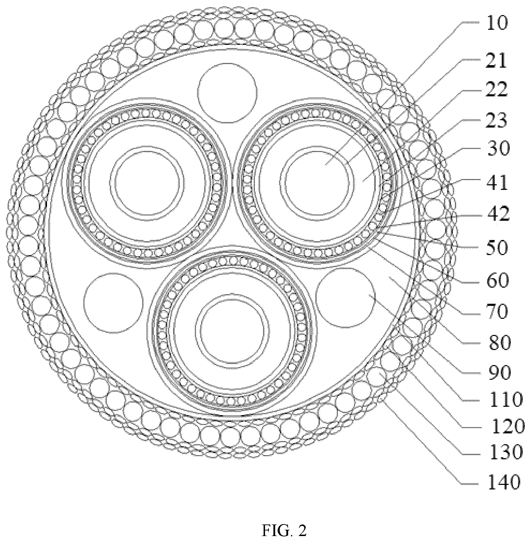

The water-blocking conductor and submarine cable of the present application will be described below with reference to FIGS. 1 and 2.

As shown in FIG. 1, in an embodiment of the present application, a water-blocking conductor 10 includes a plurality of sector-shaped stranded blocks 11, a plurality of water-blocking conductor blocks, a first optical unit 12, and a self-locking single-wire conductor layer. The plurality of sector-shaped stranded blocks 11 are spliced together to form a skeleton structure, and a through hole 101 is formed in the center of the skeleton structure. The first optical unit 12 is disposed in the through hole 101. A first water-blocking layer is provided between two adjacent sector-shaped stranded blocks 11. One water-blocking conductor block is disposed within each sector-shaped stranded block 11. The self-locking single-wire conductor layer is wrapped around the exterior of the skeleton structure.

Specifically, the sector-shaped stranded blocks 11 are stranded using a cage-type strander, and the plurality of sector-shaped stranded blocks 11 are spliced together to form the circular skeleton structure. The through hole 101 is formed in the center of the skeleton structure and is used for accommodating the first optical unit 12; and the first optical unit 12 may be used for detecting the temperature of the water-blocking conductor 10 in real time. Each sector-shaped stranded block 11 is filled with the water-blocking conductor block so as to fully fill the skeleton structure. After the skeleton structure is fully filled, the self-locking single-wire conductor layer is wrapped around the exterior of the skeleton structure, thereby securing the water-blocking conductor block within the sector-shaped stranded block 11 to form the water-blocking conductor 10 with a compact structure.

Further, in this embodiment, by providing the sector-shaped stranded blocks 11, the circular water-blocking conductor 10 may be partitioned to improve conductor skin effect, thereby reducing the overall resistance of the water-blocking conductor 10 and reducing line losses. Optionally, in embodiments of the present application, the number of the sector-shaped stranded blocks 11 is four to six, and the maximum section of the water-blocking conductor 10 is 5000 mm².

According to the water-blocking conductor provided by the embodiments of the present application, by providing the plurality of the sector-shaped stranded blocks 11, the circular water-blocking conductor 10 is partitioned to improve conductor skin effect, reduce the resistance of the water-blocking conductor 10 and reduce line losses. By providing the plurality of water-blocking conductor blocks, the vacant area within each sector-shaped stranded block 11 may be fully filled. By providing the self-locking single-wire conductor layer, the sector-partitioned water-blocking conductor blocks may be bound into the sector-shaped stranded blocks 11, forming the water-blocking conductor 10 with a compact structure.

As shown in FIG. 1, in the embodiment of the present application, each water-blocking conductor block includes: multiple layers of single-wire conductors 13, and a plurality of second water-blocking layers. The multiple layers of single-wire conductors 13 are disposed within one sector-shaped stranded block 11, and the second water-blocking layer is sandwiched between two adjacent layers of single-wire conductors 13.

Specifically, the plurality of single-wire conductors 13 are disposed within each sector-shaped stranded block 11, and the plurality of single-wire conductors 13 are arranged in layered configuration to fully fill the vacant area within each sector-shaped stranded block 11. The second water-blocking layer is provided between two adjacent layers of single-wire conductors 13 to improve the water-blocking performance of the water-blocking conductor 10.

Optionally, in this embodiment, there are total five layers of the single-wire conductors 13, with a total of ninety-one single-wire conductors stranded together. The second water-blocking layer has a thickness of 0.3 mm.

Further, according to the skin effect, when there is alternating current or alternating electromagnetic field in a conductor, the current inside the conductor is no longer evenly distributed, and the current is concentrated on the "skin" portion of the conductor. That is, the current is concentrated on a thin layer on the outer surface of the conductor; and when the current is closer to the surface of the conductor, the current density is greater, and the current in the interior of the conductor is smaller, which increases the resistance of the conductor and thus increases the loss power of the conductor. Such phenomenon is called the skin effect.

Based on the principle that the current is concentrated on and flows in the surface layer of the conductor, if the resistance of the surface layer of the single-wire conductor 13 is reduced, the resistivity of the conductor may be reduced, thereby reducing the losses of the water-blocking conductor 10. Among metals, the volume resistivity of copper is 1.75 × 10⁻⁸ Ωm, and the electrical resistivity of silver is 1.65 × 10⁻⁸ Ωm. The volume resistivity of silver is smaller than the volume resistivity of copper. When the silver coating is electroplated on the surface of the single-wire conductor 13, the flow of current may be concentrated in the silver coating area, thereby further reducing the resistance, and further reducing the diameter and weight of submarine cables.

As shown in FIG. 1, in the embodiment of the present application, the self-locking single-wire conductor layer includes: a first self-locking single-wire conductor layer, and a second self-locking single-wire conductor layer. The first self-locking single-wire conductor layer is wrapped around the exterior of the skeleton structure. The second self-locking single-wire conductor layer is wrapped around the exterior of the first self-locking single-wire conductor layer. The stranding direction of the second self-locking single-wire conductor layer is opposite to that of the first self-locking single-wire conductor layer.

Specifically, the first self-locking single-wire conductor layer and the second self-locking single-wire conductor layer form a two-layer annular structure, thereby improving the binding capability, and enabling the single-wire conductors 13 to be tightly filled in the sector-shaped stranded block 11.

Further, the first self-locking single-wire conductor layer includes a plurality of first self-locking single-wire conductors 14 which are annularly disposed along the circumferential direction of the skeleton structure. The second self-locking single-wire conductor layer includes a plurality of second self-locking single-wire conductors 15 which are annularly disposed along the circumferential direction of the first self-locking single-wire conductor layer. The first self-locking single-wire conductor 14 and the second self-locking single-wire conductor 15 are each one of a Z-type single-wire conductor and an S-type single-wire conductor.

Specifically, in this embodiment, the first self-locking single-wire conductor 14 and the second self-locking single-wire conductor 15 may both be the Z-type single-wire conductor, or both be the S-type single-wire conductor; or one may be the Z-type single-wire conductor and the other may be the S-type single-wire conductor. In the embodiment shown in FIG. 1, the first self-locking single-wire conductor 14 is the S-type single-wire conductor, the second self-locking single-wire conductor 15 is the Z-type single-wire conductor, and the stranding direction of the first self-locking single-wire conductor 14 is opposite to that of the second self-locking single-wire conductor 15. The S-type single-wire conductor and the Z-type single-wire conductor may enable the water-blocking conductors to be stranded more tightly, thereby making it be not easy to deform, reducing the creep coefficient, and improving the current-carrying capacity. Meanwhile, after the submarine cables are formed, the submarine cables have flexibility, which is beneficial to the bending of the submarine cables.

Further, in the embodiments of the present application, the first self-locking single-wire conductor 14 is the S-type single-wire conductor. The S-type single-wire conductor has better bendability than the Z-type single-wire conductor, so as to enable the water-blocking conductors to possess good flexibility, which is convenient for the construction of submarine cables.

Optionally, in the embodiments of the present application, the first self-locking single-wire conductor 14, the second self-locking single-wire conductor 15 and the single-wire conductor 13 are enamel-coated wires, or metal wires provided with a surface oxide layer on the surface thereof.

According to the water-blocking conductor 10 provided by the embodiments of the present application, by providing the S-type single-wire conductor and the Z-type single-wire conductor, the water-blocking conductor 10 may be stranded more tightly and is not easy to deform. Meanwhile, the creep coefficient of the water-blocking conductor 10 is reduced, and the current-carrying capacity of the water-blocking conductor 10 is improved. After the cables are formed, the submarine cables have good flexibility, which is convenient for the transportation and laying of submarine cables.

Further, in the embodiments of the present application, the self-locking single-wire conductor layer further includes a third water-blocking layer, which is sandwiched between the first self-locking single-wire conductor layer and the second self-locking single-wire conductor layer, so as to improve the water-blocking performance of the water-blocking conductor.

Optionally, in the embodiments of the present application, the first water-blocking layer, the second water-blocking layer and the third water-blocking layer may each be an insulation water-blocking tape, an insulation water-blocking rope, or a water-blocking compound material, etc.

According to the water-blocking conductor provided by the embodiments of the present application, by providing the water-blocking layers between the sector-shaped stranded blocks, between the single-wire conductors and between the first self-locking single-wire conductor and the second self-locking single-wire conductor, the water-blocking performance of the water-blocking conductor is improved, thereby enabling the partitioned conductor to be applied to the field of submarine cables.

As shown in FIG. 1, in the embodiment of the present application, the first optical unit 12 includes a plurality of optical fibers and a water-blocking fiber paste. The water-blocking fiber paste is provided among the plurality of optical fibers. The optical fibers are used to detect the temperature of the water-blocking conductor in real time.

As shown in FIG. 2, the embodiments of the present application further provide a submarine cable, including the water-blocking conductor 10, a cross-linked layered structure, and a first semi-conductive water-blocking layer 30. The cross-linked layered structure is wrapped around the exterior of the water-blocking conductor 10, and the first semi-conductive water-blocking layer 30 is wrapped around the exterior of the cross-linked layered structure.

Specifically, the cross-linked layered structure includes: a conductor shielding layer 21, an insulation layer 22 and an insulation shielding layer 23, which are arranged in sequence. The conductor shielding layer 21 is wrapped around the exterior of the water-blocking conductor 10, the insulation layer 22 is wrapped around the exterior of the conductor shielding layer 21, and the insulation shielding layer 23 is wrapped around the exterior of the insulation layer 22. The conductor shielding layer 21, the insulation layer 22, and the insulation shielding layer 23 are formed by three-layer co-extrusion. The insulation layer 22 is a cross-linked polyethylene insulation layer. The first semi-conductive water-blocking layer 30 is a semi-conductive water-blocking tape material containing highly water-swellable particles.

According to the submarine cable provided by the embodiments of the present application, by providing the water-blocking conductor 10, the resistance of the water-blocking conductor 10 is reduced, thereby reducing line losses.

As shown in FIG. 2, in the embodiment of the present application, the submarine cable further includes: a metal shielding layer and a second semi-conductive water-blocking layer 50. The metal shielding layer is wrapped around the exterior of the first semi-conductive water-blocking layer 30, and the second semi-conductive water-blocking layer 50 is wrapped around the exterior of the metal shielding layer.

Specifically, the metal shielding layer includes a first metal shielding layer 41 and a second metal shielding layer 42. The first metal shielding layer 41 is wrapped around the exterior of the first semi-conductive water-blocking layer 30, and the first metal shielding layer 41 is a configuration of red copper wires helically wound with space. The second metal shielding layer 42 is wrapped around the exterior of the first metal shielding layer 41, and the second metal shielding layer 42 is a structure of open-helix wrapping of red copper tapes. The second semi-conductive water-blocking layer 50 is a semi-conductive water-blocking tape material containing highly water-swellable particles.

As shown in FIG. 2, in the embodiment of the present application, the submarine cable further includes a composite tape layer 60 and a sheath layer 70. The composite tape layer 60 is wrapped around the exterior of the second semi-conductive water-blocking layer 50, and the sheath layer 70 is wrapped around the exterior of the composite tape layer 60. The composite tape layer 60 is an aluminum-plastic composite tape or a copper-plastic composite tape. The sheath layer 70 is a polyethylene sheath.

Further, the water-blocking conductor 10, the cross-linked layered structure, the first semi-conductive water-blocking layer 30, the shielding layer, the second semi-conductive water-blocking layer 50, the composite tape layer 60, and the sheath layer 70 constitute a single electrical unit. The second optical unit 90 is provided between two electrical units, and the remaining portions are filled with the filling layer 80. A plurality of electrical units, a plurality of second optical units 90, and a plurality of filling layers 80 are wrapped into a cable by a wrapping tap layer 110, forming a cable structure.

Further, an inner liner layer 120, an armoring layer 130 and an outer cladding layer 140 are sequentially wrapped outside the wrapping tape layer 110. The inner lining layer 120 and the outer cladding layer 140 are formed by polypropylene ropes, the armoring layer 130 is formed by steel wires or copper wires, and the wrapping tape layer 110 is formed by a dual-layer non-hygroscopic binding wrapping tape.

Finally, it should be noted that: the foregoing embodiments are merely intended for describing the technical solutions of the present application rather than limiting the present application; although the present application is described in detail with reference to the foregoing embodiments, persons of ordinary skill in the art should understand that the technical solutions described in the foregoing embodiments may be modified or made equivalent substitutions to some or all technical features thereof; and these modifications or substitutions shall not cause the essence of the corresponding technical solutions to depart from the spirit and scope of the technical solutions of various embodiments of the present application.

## Claims

1. A water-blocking conductor, comprising:
a plurality of sector-shaped stranded blocks, wherein the plurality of sector-shaped stranded blocks are spliced together to form a skeleton structure, a through hole is formed in a center of the skeleton structure, a first optical unit is provided in the through hole, and a first water-blocking layer is provided between two adjacent sector-shaped stranded blocks;
a plurality of water-blocking conductor blocks, wherein each water-blocking conductor block is provided within one sector-shaped stranded block;
a self-locking single-wire conductor layer, which is wrapped around an exterior of the skeleton structure.

2. The water-blocking conductor according to claim 1, wherein the each water-blocking conductor block comprises:
multiple layers of single-wire conductors, which are provided within one sector-shaped stranded block;
a plurality of second water-blocking layers, each second water-blocking layer being sandwiched between two adjacent layers of the single-wire conductors.

3. The water-blocking conductor according to claim 1, wherein the self-locking single-wire conductor layer comprises:
a first self-locking single-wire conductor layer wrapped around the exterior of the skeleton structure;
a second self-locking single-wire conductor layer wrapped around an exterior of the first self-locking single-wire conductor layer, wherein a stranding direction of the second self-locking single-wire conductor layer is opposite to a stranding direction of the first self-locking single-wire conductor layer.

4. The water-blocking conductor according to claim 3, wherein the first self-locking single-wire conductor layer comprises a plurality of first self-locking single-wire conductors which are annularly disposed along a circumferential direction of the skeleton structure;
the second self-locking single-wire conductor layer comprises a plurality of second self-locking single-wire conductors which are annularly disposed along a circumferential direction of the first self-locking single-wire conductor layer;
each of the first self-locking single-wire conductor and the second self-locking single-wire conductor is one of a Z-type single-wire conductor and an S-type single-wire conductor.

5. The water-blocking conductor according to claim 3, wherein the self-locking single-wire conductor layer further comprises a third water-blocking layer sandwiched between the first self-locking single-wire conductor layer and the second self-locking single-wire conductor layer.

6. The water-blocking conductor according to claim 1, wherein the first optical unit comprises a plurality of optical fibers and a water-blocking fiber paste, the water-blocking fiber paste is filled between the plurality of optical fibers, and the plurality of optical fibers are configured for detecting a temperature of the water-blocking conductor in real time.

7. The water-blocking conductor according to claim 4, wherein the first self-locking single-wire conductor and the second self-locking single-wire conductor are enamel-coated wires, or metal wires with an oxide layer.

8. A submarine cable, comprising:
the water-blocking conductor according to any one of claims 1 to 7;
a cross-linked layered structure formed by a conductor shielding layer, an insulation layer and an insulation shielding layer, wherein the cross-linked layered structure is wrapped around an exterior of the water-blocking conductor;
a first semi-conductive water-blocking layer wrapped around an exterior of the insulation shielding layer.

9. The submarine cable according to claim 8, further comprising:
a metal shielding layer wrapped around an exterior of the first semi-conductive water-blocking layer;
a second semi-conductive water-blocking layer wrapped around an exterior of the metal shielding layer.

10. The submarine cable according to claim 9, wherein the metal shielding layer comprises:
a first metal shielding layer wrapped around an exterior of the first semi-conductive water-blocking layer, wherein the first metal shielding layer is a configuration of red copper wires helically wound with space;
a second metal shielding layer wrapped around an exterior of the first metal shielding layer, wherein the second metal shielding layer is a structure of open-helix wrapping of red copper tapes.
